(19)

Europäisches
Patentamt
European
Patent Office
Office européen
des brevets

(11) **EP 3 051 452 A1**

(12) **EUROPEAN PATENT APPLICATION**

(43) Date of publication:
**03.08.2016 Bulletin 2016/31**

(21) Application number: **15305155.2**

(22) Date of filing: **02.02.2015**

(51) Int Cl.:
*G06F 21/35* (2013.01)     *G06F 21/64* (2013.01)
*G06F 21/72* (2013.01)     *G06F 21/77* (2013.01)
*G06F 21/71* (2013.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **GEMALTO SA
92190 Meudon (FR)**

(72) Inventors:
• **Chene, Gilles
13881 Gemenos Cedex (FR)**
• **Brun, Alain
13881 Gemenos Cedex (FR)**

(74) Representative: **Scheer, Luc et al
Gemalto SA
525, Avenue du Pic de Bertagne
CS 12023
13881 Gémenos Cedex (FR)**

(54) **Method and device for accessing a service**

(57)     The invention relates to a method 20 for accessing a service.

According to the invention, a device 12 comprises data storing means, the method comprises the following steps. The device receives 22 data. The device gets 28, based upon the received data, transaction data. The device signs 212 the transaction data by using a private key relating to a transaction processing, a signature operation result being a transaction signature. The data storing means stores 218 the transaction data and the transaction signature. The device gets 224, based upon the received data, service data. The device sends to a first external entity the service data 228. The device sends the transaction data and the transaction signature 232 to either the first external entity or a second external entity.

The invention also relates to a corresponding device.

**Fig. 1**

EP 3 051 452 A1

# Description

## Field of the invention:

The invention relates generally to a method for accessing a service.

Furthermore, the invention also pertains to a device for accessing a service.

The device may be a terminal, a user terminal, an embedded chip or a smart card, as a Secure Element (or SE).

Within the present description, an SE is a smart object that includes a chip that protects, as a tamper resistant component, physically access to stored data and is intended to communicate data with the outside world, like e.g. a mobile (tele)phone, as an SE host device.

## State of the art:

As known per se, an individual who desires to buy a transport ticket has to go to a vending machine or a Point Of Sale (or POS) terminal, as an infrastructure access point.

The infrastructure access point allows an individual to get the transport ticket only when a (payment) transaction operation is authorized during an on-line connection, through an infrastructure, to a bank server by using an individual bank card, like e.g. an Europay, Mastercard and Visa (or EMV) card.

However, a transport or service operator has to use a huge and costly infrastructure, so as to perform a corresponding transaction operation before delivering a transport ticket, as service access rights.

Furthermore, there may exist, in a rush period, a queue, so that the individual has to queue prior to getting service access rights.

Thus, there is a need to provide a solution that allows an individual to get, in an efficient, quick, simple and secure way, service access rights.

## Summary of the invention:

The invention proposes a solution for satisfying the just herein above specified need by providing a method for accessing a service.

According to the invention, a device comprising data storing means, the method comprises the following steps. The device receives data. The device gets, based upon the received data, transaction data. The device signs the transaction data by using a private key relating to a transaction processing, a signature operation result being a transaction signature. The data storing means stores the transaction data and the transaction signature. The device gets, based upon the received data, service data. The device sends to a first external entity the service data. The device sends the transaction data and the transaction signature to either the first external entity or a second external entity.

The principle of the invention consists in that a device retrieves from received data transaction data, generates a corresponding signature, retrieves from the received data service data and transmits the service data to an outer entity and the transaction data and its signature to the outer entity or another outer entity.

Thus, the device carries out a generation of a transaction signature, as an off-line "transaction" operation.

Contrary to the aforementioned prior art solution, thanks to such an off-line transaction operation, there is no need to be on-line, i.e. to be connected, through a specific infrastructure access point, to a transaction server. Compared to the aforementioned prior art solution, the invention off-line transaction operation allows a device user to avoid queuing, so as to carry out a transaction operation.

Advantageously, after the transaction signature generation, the device may further analyse whether the transaction is or is not authorized. Only if the transaction is authorized, the device continues by carrying out the next data transmission operations. Such an off-line transaction authorization therefore occurs prior to the service data transmission operation and the transaction data and signature transmission operation. Compared to the aforementioned prior art solution, the off-line transaction authorization is issued in advance and not during an on-line transaction operation at the infrastructure access point. Thus, the invention solution allows a device user to save time and therefore to go fast.

Since the off-line transaction operation is done at the device side and not at a server side, the off-line transaction operation allows facilitating and accelerating access to service data with respect to the on-line transaction operation relating to the aforementioned prior art solution.

Once the off-line transaction operation is carried out by the device, it is quasi immediate that the device retrieves service data, like e.g. an electronic transport ticket.

Then, the device sends the service data to an external device, as a service data delivering operation, so as to benefit from a corresponding service.

If the external device is connected to a transaction server, then the device also sends, through the external device, to the transaction server, the transaction data and the corresponding transaction signature, as a clearing operation.

Alternatively, instead of addressing the transaction server that is accessed through an infrastructure managed by the service operator (or on its behalf), the device sends to the transaction server (or the like) the transaction data and the corresponding transaction signature only when the device is under a radio coverage of a Network Access Point (or NAP), like e.g. a Wifi hotspot, as an Internet NAP, or a Base Transceiver Station, as a mobile radio-communication NAP. Compared to the aforementioned prior art solution, such an alternative invention solution does not need any additional infrastructure, like e.g. an infrastructure access point, that is needed for a service operator, so as to get access to the transaction server.

According to such an invention solution, the device carries out the clearing operation.

The clearing operation therefore occurs, after a data reception by the device, during either the service data delivering operation, i.e. through an infrastructure, or a connection, through a radio NAP, to a transaction server, i.e. as soon as a radio NAP is available from the device.

Compared to the aforementioned prior art solution in which the clearing operation occurs prior to a reception of a ticket, as service data, the invention clearing operation is thus delayed after the data reception by the device. The invention clearing operation may occur before, during or after the service data delivering operation.

The proposed invention solution may be automatic. The proposed invention solution does not need to involve a user and is therefore convenient for the user, except from a possible voluntary action(s), so as to get data from a data issuing device and/or to transmit data to an external device(s).

According to a further aspect, the invention is a device for accessing a service.

According to the invention, the device comprising data storing means, the device is configured to receive data, to get, based upon the received data, transaction data, to sign the transaction data by using a private key relating to a transaction processing. A signature operation result is a transaction signature. The data storing means stores the transaction data and the transaction signature. The device is configured to get, based upon the received data, service data, to send to a first external entity the service data; and to send the transaction data and the transaction signature to either the first external entity or a second external entity.

As a device, it may be any electronic device comprising data processing means, data storing means and one or several Input/Output (or I/O) communication interfaces.

The device may be a terminal, a user terminal or an SE.

As a user terminal, it may be, for instance, a mobile (tele)phone, a tablet, a game console, a netbook, a Personal Digital Assistant (or PDA), a Personal Computer (or PC), a mobile laptop and/or an electronic mobile equipment or accessory (e.g.: glasses, a watch or a jewel).

The invention does not impose any constraint as to a kind of the SE type.

As a removable SE, it may be a Subscriber Identity Module (or SIM) type card, a Secure Removable Module (or SRM), a smart dongle of the USB (acronym for "Universal Serial Bus") type, a (micro-) Secure Digital (or SD) type card, a Multi-Media type Card (or MMC) or any other format card to be coupled or connected to a host device, like e.g. a terminal.

Instead of a removable SE, the SE may be embedded, like e.g. an embedded Universal Integrated Circuit Card (or eUICC), as a chip incorporated within a host device, such as a user terminal.

**Brief description of the drawings:**

Additional features and advantages of the invention will be more clearly understandable after reading a detailed description of one preferred embodiment of the invention, given as an indicative and non-limitative example, in conjunction with the following drawings:

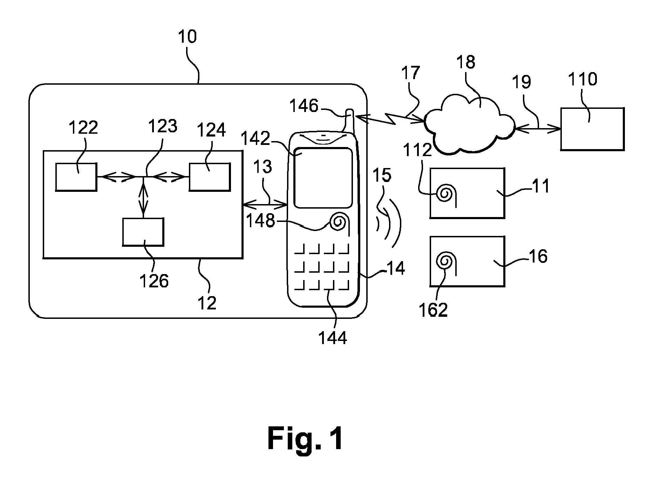

- Figure 1 illustrates a simplified schematic view of an eUICC, as a chip, comprised within a mobile terminal, the chip being arranged to receive data, to get, based on the data, transaction data and to generate a corresponding signature, to get, based on the received data, service data and to send to a service terminal the service data and to a transaction server the transaction data and signature, according to the invention; and

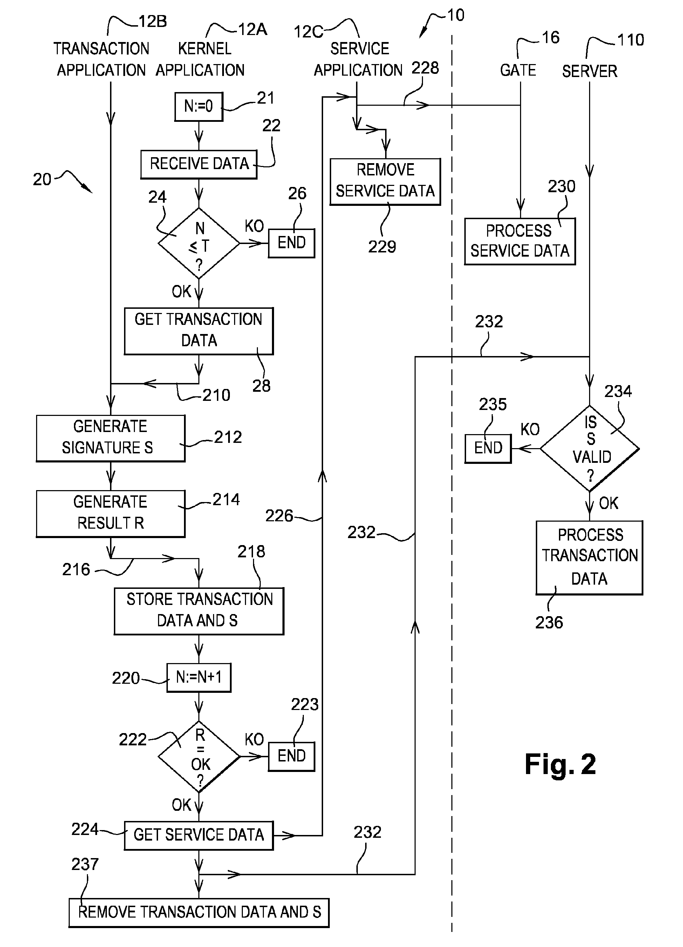

- Figure 2 is an example of one chart flow between the chip, the service terminal and the transaction server of figure 1, so that, firstly, the chip carries out a reception of data, retrieves transaction data, generates a transaction signature, then sends to an infrastructure access point the service data and, once under a radio coverage of a mobile network, the chip sends to the transaction server the transaction data and signature.

**Detailed description:**

Herein under is considered an embodiment in which the invention method for accessing a service is implemented by an SE, as a device, embedded within a user terminal.

According to such a described embodiment, at the client side, the device cooperates with the user terminal, so as to provide notably the transaction server with the transaction data and a corresponding signature. Alternatively, the device includes, instead of an SE, a Trusted Execution Environment (or TEE), as a secure area of the main processor of the terminal and a secured runtime environment, that performs the functions that the SE performs and that are described infra.

According to another embodiment (not represented), the invention method for accessing a service is implemented by, at the client side, a wearable device, as a standalone device, i.e. a device that does not cooperate with any other device, irrespective of whether the wearable device type is a terminal, a user terminal or an SE. The wearable device performs the functions that the SE performs and that are described infra.

Naturally, the herein below described embodiment is only for exemplifying purposes and is not considered to reduce the scope of the invention.

**Figure 1** shows schematically a mobile equipment 10 that includes a chip 12 and a ConTact-Less (or CTL) mobile phone 14, as a user terminal, a CTL tag 11, as data issuing device, a CTL gate 16, as a service terminal, and a remote server 110, as a transaction server.

For sake of simplicity, the CTL tag 11, the chip 12, the CTL mobile phone 14, the CTL gate 16 and the remote server 110 are termed infra the tag 11, the SE 12, the phone 14, the gate 16 and the server 110 respectively.

Within the present description, the adjective "ConTact-Less" used within the expression "CTL mobile phone" means notably that the phone 14 communicates via a Short Range (or SR) Radio-Frequency (or RF) link by using, for instance, International Standardization Organization/ International Electro-technical Commission (or ISO/IEC) 14 443 specifications, a Ultra High Frequency Radio-Frequency IDentification (or UHF RFID), a Near Field Communication (or NFC) type technology or the like. Such an SR RF requires to be sufficiently close, for instance, up to 20 cm from a CTL enabled interlocutor, like e.g. the tag 11 and the gate 16, so as to exchange data between the phone 14 and the CTL enabled interlocutor.

Only one user terminal 14 with one SE 12 is represented at a client side. Nevertheless, the invention is also applicable to several user terminals with none, one or several SEs, at the client side.

Likewise, only one server is represented at a server side. However, the invention is still applicable to several servers, at the server side.

The tag 11 includes a memory (not represented). The memory stores data to be provided to a CTL device, like e.g. the phone 14. The stored data allows its addressee to access a service.

The tag 11 includes an antenna 112 that allows communicating stored data, through an SR RF link, to a CTL device, like e.g. the phone 14.

The SE 12 is soldered to a Printed Circuit Board (or PCB) of the CTL mobile phone 14.

The phone 14, as an SE 12 hosting device, incorporates the SE 12.

Alternately, instead of using the SE 12, the phone 14 stores, within its own memory (not represented), data stored within the SE 12 as described infra.

The SE 12 belongs to a phone 14 user, as a phone 14 owner, possibly a subscriber to a service operator and preferably a mobile (radio-communication) network 18 operator.

The SE 12 is able to receive data that originates from a service provider or operator, like e.g. a transport operator.

The SE 12 is configured to get, based on the received data, transaction data. The transaction data allows performing a transaction from an SE 12 owner account.

The transaction data may include one or several elements of the following group:

- one or several identifiers, like e.g. an application identifier, an SE 12 serial number;
- user information;
- one or several transaction statuses, like e.g. an approval or a refusal for performing a corresponding transaction;
- a transaction amount;
- a transaction currency, like e.g. euro or US dollar;
- a transaction date. The transaction date may be retrieved from the phone 14 or a dating entity, like e. g. an on-line connected server;
- a transaction type and description, like e.g. a purchase of three transport tickets;
- one or several transaction cryptograms that comprise a transaction signature, as transaction proof;
- one or several transaction security parameters, like e.g. a value of a transaction counter that counts a number of transaction(s) that the SE 12 carries out. The transaction counter value identifies a transaction.

The SE 12 is configured to sign the transaction data by using a private key Kpriv relating to a transaction processing. A signature algorithm may be e.g. a River Shamir and Adleman (or RSA) type algorithm. The signature algorithm is used for signing the transaction data. The transaction data, as data to be signed and a message M, may be a message digest that represents a fingerprint of the data to be signed. The fingerprint may be a result of a hash function, like e.g. SHA-2. A signature operation result is a transaction signature.

The SE 12 is arranged to get, based on the received data, service data. The service data allows accessing a service.

The SE 12 is adapted to send, preferably through an SR RF link 15, the service data to an external device, like e.g. the gate 16.

The SE 12 is adapted to send, through the SR RF link 15, the transaction data and the transaction signature, through the external device and a service operator infrastructure, to the server 110.

Alternatively, instead of using an SR RF link 15, the SE 12 is adapted to send, through a Long Range (or LR) RF link 17, the transaction data and the transaction signature, through the mobile network 18, to the server 110.

The SE 12 includes one (or several) microprocessor(s) 122, as data processing means, one (or several) memory(ies) 124, as data storing means, and one (or several) I/O) interface(s) 126 that are internally all connected, through an internal bidirectional data bus 123, to each other.

The I/O interface(s) 126 allow(s) communicating data from the internal chip components to the chip exterior and conversely.

The microprocessor 122 processe(s), control(s) and communicate(s) internally data with all the other components incorporated within the SE 12 and, through the I/O interface(s) 126, with the chip exterior.

The microprocessor 122 executes an Operating System (or OS) and one or several applications.

The microprocessor 122 executes, in a preferred manner, one or several security applications.

The security applications include preferably a user authentication process to be used prior to accessing the memory 124. To authenticate successfully the user, the user has to provide a Personal Identity Number (or PIN), biometric data and/or the like, as user reference authentication data that is securely stored within the memory 124, that has to match the user reference authentication data.

The microprocessor 122 is preferably able to initiate actions, in order to interact directly with the outside world, in an independent manner of the SE hosting device. Such a capacity of interaction at the initiative of the SE 12 is also known as a proactive capacity, in which the SE 12 plays a role of a master while the phone 14 plays a role of a slave. The SE 12 is thus able to send, at its own initiative, through the phone 14, to any device connected to the phone 14, a proactive command for sending, for instance, through a mobile network 18, to the server 110 transaction data and a corresponding signature.

The microprocessor 122 executes preferably three invention applications.

The memory 124 stores preferably an invention service application. The service application processes data relating to the service.

Alternatively, instead of being supported by the SE 12, the phone 14 stores and executes the service application.

The memory 124 stores preferably an invention transaction application, like e.g. an EMV application. The transaction application processes data relating to the transaction.

Alternatively, instead of being supported by the SE 12, the phone 14 stores and executes the transaction application.

The memory 124 stores preferably an invention kernel application. The kernel application interfaces with one or several external devices, like e.g. the tag 11, so as to receive data, and the server 110, so as to send to this latter the transaction data and the transaction signature. The kernel application interfaces with the service application and the transaction application.

Alternatively, instead of being supported by the SE 12, the phone 14 stores and executes the kernel application.

The memory 124 (or the phone 14 memory) stores preferably a Uniform Resource Identifier (or URI), like e.g. a Uniform Resource Locator (or URL) and/or an Internet Protocol (or IP) type address or the like, as an identifier(s) relating to the server 110 to be addressed.

The server identifier(s) is(are) used by the phone 14, acting as a client device, for transferring to the server 110 notably transaction data and its signature.

The memory 124 stores preferably a decipherment key relating to a service operator or provider. The decipherment key is used for deciphering enciphered data to be received and for getting corresponding data in plain text.

The memory 124 stores preferably a public key relating to a service provider. The public key is used for verifying whether a signature relating to data to be received from a service provider is or is not valid.

The memory 124 stores preferably a pattern of data relating to a service provider. The pattern of data is used for analyzing whether received data is or is not valid. Thus, the SE 12 is able to identify data fields contained within the received data and thus identify corresponding data, like e.g. the type of the service data, the price and/or the number.

The memory 124 stores user data, like e.g. a Personal Account Number (or PAN), a first name, a last name, a birth date, a personal picture(s), a user identifier, a mail address of the user, a telephone number of the user, an email address of the user, a Session Initiation Protocol (or SIP) address of the user, a telecopy number of the user, a key(s) Ki associated with the user identifier, a PIN(s), a biometrics print(s) and/or other appropriate data.

The PAN is a bank account number which is to be debited for a transaction to be carried out to access a service.

The memory 124 stores preferably the private key Kpriv relating to a transaction processing. The private key Kpriv is to be used for signing transaction data. The memory 124 stores preferably the transaction data and the transaction signature that is generated by the SE 12. The memory 124 stores preferably a corresponding public key Kpub relating to the transaction processing. The public key Kpub is to be used for verifying the transaction signature that is associated with the transaction data.

The memory 124 stores preferably data relating to one or several wireless services.

The memory 124 stores, preferably in a secure manner, one or several sets of data relating, each, to a subscription to a mobile network(s).

Each set of data, as wireless service data, relating to one subscription to one (or several) network(s) includes:

- an International Mobile Subscriber Identity (or IMSI), as a subscriber and a service subscription identifier for accessing a mobile network;
- a key Ki, as an authentication key, allowing to authenticate the concerned subscriber to the concerned mobile network;
- Milenage, as an authentication algorithm, allowing to authenticate the concerned subscriber to the concerned mobile network;

- one or several passwords, like e.g. a PIN, biometric data and/or one or several cryptographic algorithm(s), as data relating to secret(s);
- a file system including one or several Elementary Files (or EF);
- one or several security keys, like e.g. a key(s) for encrypting/decrypting data and/or a key(s) for signing data a key(s); and/or
- one or several credentials, like e.g. a user name and/or an IDentifier (or ID) of the subscriber, as data relating to the user.

The memory 124 stores preferably one (or several) SIM type application(s).

The SIM type application(s) includes, among others, a SIM application for a Global System for Mobile communication (or GSM) type network, a Universal Subscriber Identity Module (or USIM) application for a Universal Mobile Telecommunications System (or UMTS) type network, a Code Division Multiple Access (or CDMA) Subscriber Identity Module (or CSIM) application and/or an Internet protocol Multimedia Subsystem (or IMS) Subscriber Identity Module (or ISIM) application.

The SIM type application(s) allow(s) the SE 12 hosting device, like e.g. the phone 14, to authenticate to one (or several) mobile network(s) 18 by using the one (or several) subscription identifier, like e.g. a subscription IMSI, and a corresponding network authentication, like e.g. Ki.

The SE 12 is connected, through a bi-directional contact link 13, to the phone 14.

The phone 14 is preferably able to interact with the SE 12, so as to identify and authenticate, in particular, to the mobile network 18.

The phone 14 is preferably provided with a display screen 142 and a keyboard 144, as Man Machine Interface (or MMI). The MMI allows the phone user to interact with the phone 14 and preferably the SE 12.

Alternately, instead of a separate keyboard 144, the phone 14 is equipped with a touch display screen (not represented) that incorporates a virtual keyboard that is displayed.

The phone 14 is preferably further provided with a loudspeaker and a microphone, as MMI.

The phone 14 includes one or several microprocessors (not represented), as data processing means, volatile and non-volatile memories (not represented), as means for storing data, and one or several I/O interfaces (not represented) linked together through a data and control bus (not represented).

The microprocessor processes and controls data within the phone 14 and/or data to be exchanged with outside of the phone 14. The microprocessor controls and communicates with all the components of the phone 14, such as the I/O interfaces.

The phone 14 memories store data notably relating to an OS and applications supported by the phone 14.

The phone 14 memories may be constituted by one or several EEPROMs (acronym for "Electrically Erasable Programmable Read-Only Memory"), one or several ROMs (acronym for "Read Only Memory"), one or several Flash memories, and/or any other memories of different types, like one or several RAMs (acronym for "Random Access Memory").

The phone 14 memory stores an International Mobile Equipment Identity (or IMEI) and/or an email address, as an identifier(s) relating to the phone 14.

The phone 14 has a first antenna 146 that allows communicating, Over The Air (or OTA), via an LR RF link 17, through the mobile network(s) 18, with the server 110.

The mobile network(s) 18 may include one or several cellular (tele)communication networks, like a Global System for Mobile Communications (or GSM), a General Packet Radio Service (or GPRS), a Universal Mobile Telecommunications System (or UMTS), an EDGE (acronym for "Enhanced Data Rates for GSM Evolution"), a Code Division Multiple Access (or CDMA), and/or a Long Term Evolution (or LTE) type network(s).

Such a cellular communication network set is not exhaustive but only for exemplifying purposes.

The phone 14 includes a second antenna 148 and preferably a chip (not represented) that allow communicating, via an SR RF link 15, with an external CTL device, like e.g. the gate 16, as a service terminal.

The gate 16 includes a memory (not represented). The memory stores data, as service data, to be received from a CTL device, like e.g. the phone 14. The stored data allows its provider to access a service.

The gate 16 includes an antenna 162 that allows getting data, through an SR RF link 15, from a CTL device, like e.g. the phone 14.

The gate 16 is preferably connected to an infrastructure (not represented) that collects the whole service data that is provided to the gate 16 and other gates (not represented).

Additionally, the gate 16 may also forward the transaction data and the transaction signature to the server 110.

The server 110 is connected, through a bi-directional link 19, to the mobile network.

The server 110 may be operated by a service provider, a bank operator or on its behalf.

The server 110 is integrated within an entity of a system, as a back-end OTA or Over-The-Internet (or OTI) system.

The server 110 is hosted by a computer with data processing means and data storing means.

The server 110 supports a signature verification application.

To verify a signature S, the server 110 analyses whether the following predetermined mathematical formula, as one example, is satisfied:

$$S^v \bmod m = M;$$

in which:

- S represents the signature;
- mod denotes the modulo function;
- (v, m) represents a couple of parameters relating to the public key Kpub in which v is a public exponent and m represents the RSA type modulus; and
- M denotes data to be signed and that accompanies the signature S.

Once the signature S is received, the server 110 raises the signature S to the power of v (mod m) to get a resulting value. Then, the server 110 compares the resulting value to the received message M, as signed data. Only when the resulting value matches the received message M, the server 110 validates the transaction signature S.

Alternatively, instead of verifying the signature, when the server 18 does receive neither the transaction data, as data to be signed, nor a corresponding digest (of the data to be signed), the server 110 verifies that a data structure relating to the transaction signature is correct.

The server 110, as addressee of information to be sent over the phone 14, may be identified by a URI, like e.g. a URL, a call phone number of a server, a video-conference call phone number of a server, an Internet address and/or an email address of a server relating to a service provider, as server identifier(s).

The server 110 is able to validate (or not) that the transaction signature S is correct.

The server 110 (or another entity which the server 110 is connected to) is further able to process the transaction data, like e.g. to debit the SE 12 owner account and possibly to credit a service provider account.

**Figure 2** depicts an exemplary embodiment of a message flow 20 that involves the SE 12, the gate 16 and the server 110.

It is assumed that, at the mobile equipment 10 side, the SE 12 supports the kernel application 12A, the transaction application 12B and the service application 12C.

It is assumed that the user of the phone 14 desires to buy a subway ticket, as service data.

It is assumed that the phone 14 exchanges with the server 110 by using e.g. HyperText Transfer Protocol (or HTTP) and/or Short Message Service (or SMS) type messages. However, any other data communication protocol between the phone 14 and the server 110, like e.g. a secured data communication protocol (securing in confidentiality and/or in integrity the data thus exchanged) Transport Layer Security (or TLS) protocol, may be used additionally to the HTTP and/or SMS protocol(s).

Firstly, optionally, the kernel application sets 21 a counter N to an initial value, like e.g. zero. The counter N is used for verifying that, each time a transaction is performed at the SE 12, the corresponding service data, transaction data and transaction signature for each transaction have been sent. Thus, data relating to a previous transaction, namely service data, transaction data and signature, is not re-used, so as to avoid the fraud.

The user of the phone 14 gets her/his phone 14 sufficiently close to the tag 11 (not represented), so as to fetch data that is stored within the tag 11.

Alternatively, instead of getting locally data over an SR RF link 15, the kernel application 12A gets, under a user control through the phone 14 MMI, the data during an OTA connection from a data delivering server (not represented), so as to select the concerned service data among several possibilities, like e.g. a single subway ticket and a return sub-way ticket for a desired route.

The kernel application 12A receives 22 data.

The received data may be ciphered. The kernel application 12A deciphers the received data, so as to get data in plain text, by using a decipherment key relating to the service provider. The decipherment key is stored within the SE memory 124.

The received data is preferably signed by the service operator by using a private key relating to the service provider or operator.

If the received data is signed, then the kernel application 12A receives a data signature relating to the service provider. The kernel application 12A verifies (not represented) whether the (received) data signature is or is not valid by using preferably the received data and the public key relating to the service provider. Only if the data signature is valid, the kernel application 12A goes on and processes the next step of the initiated data processing. Otherwise, i.e. if the data signature is not valid, the kernel application 12A stops the initiated data processing.

The kernel application 12A analyses (not represented) whether the received data is or is not valid. Only if the received data is valid, the kernel application 12A goes on and processes the next step of the initiated data processing. Otherwise, i.e. if the received data is not valid, the kernel application 12A stops the initiated data processing.

After one or several possible successful validations and/or data processing, the kernel application 12A verifies 24 whether the counter value is less than or equal to a predetermined threshold value, like e.g. one. If the counter value is greater than the predetermined threshold value, then the kernel application 12A stops 26 the initiated data processing.

If the counter value is less than or equal to the predetermined threshold value, then the kernel application 12A gets 28, based on the received data, transaction data.

Optionally, the kernel application 12A sends, through the phone 14 MMI, a message for requesting the SE user to accept or deny the requested transaction. If the SE user denies or refuses the transaction, then the kernel application 12A stops the initiated data processing and does not perform any transaction. Otherwise, i.e. if the SE user accepts the transaction after a possible user data modification, like e.g. a number of tickets to be purchased, the kernel application 12A goes on processing the transaction data.

Then, the kernel application 12A sends to the transaction application 12B a message 210 that includes a request for performing a transaction accompanied with the transaction data.

Optionally, the transaction application 12B verifies (not represented) whether the user is or is not authenticated by verifying whether the user submits an expected PIN or other reference authentication data. If the transaction application 12B does not authenticate the phone 14 user, then the transaction application 12B stops the initiated data processing. If the transaction application 12B authenticates successfully the phone 14 user, then the transaction application 12B generates 212 a transaction signature S by using the private key Kpriv relating to the transaction processing and the transaction data.

Once the transaction signature is generated, the transaction application 12B generates 214 preferably a transaction analysis result R, namely either a transaction authorization or a transaction refusal, after having analyzed whether a corresponding transaction is accepted or refused.

Alternatively, instead of the transaction application 12B, if an OTA connection is available through the phone 14, a server or the server 110 connected to the mobile network 18 generates preferably a transaction analysis result R, namely either a transaction authorization or a transaction refusal, after having analyzed whether a corresponding transaction is accepted or refused.

Then, the transaction application 12B sends to the kernel application 12A a message 216, as response to the request message 210, the transaction data and the transaction signature S and preferably the transaction analysis result R.

Once the transaction data and signature S are received, the kernel application 12A stores 218 into the SE memory 124 newly the transaction data and the associated transaction signature S.

Then, the kernel application 12A increments 220 preferably the counter.

The kernel application 12A analyses 222 whether the transaction analysis result R is or is not a transaction authorization.

If the transaction analysis result R is not a transaction authorization, then the kernel application 12A stops 223 the initiated data processing. Otherwise, i.e. if the transaction analysis result R is a transaction authorization, the kernel application 12A gets 224, based on the received data, the service data.

Alternatively, instead of the kernel application 12 A, the kernel application 12A sends to the service application 12C the received data and the service application 12C gets (not represented), based on the received data, the service data.

Then, the kernel application 12A sends to the service application 12C a message 226 including the service data.

The service application 12C sends to the gate 16, as a service terminal, a message 228 including the service data.

Optionally, the gate 16 sends to the service application 12C a message (not represented) including an acknowledgement of receipt of the service data.

Optionally, the gate 16 analyses (not represented) whether the received service data is or is not valid. If the service data is not valid, the gate 16 stops the initiated data processing. Otherwise, i.e. if the service data is valid, the gate 16 goes on and processes the next step of the initiated data processing.

The gate 16 (or an entity of the infrastructure which the gate 16 is connected to) processes 230 the service data.

Optionally, the gate 16 sends to the service application 12C a message (not represented) informing about a successful processing of the service data.

Once the service data has been sent by the service application 12C (or the kernel application 12A) to the gate 16 and preferably an acknowledgment of receipt has been received by the service application 12C (or the kernel application 12A), the service application 12C (or the kernel application 12A) deletes or removes 229 preferably the service data stored within the SE memory 124.

According to one particular embodiment, as soon as the phone 14 is under a radio coverage of the mobile network 18, the kernel application 12A sends, through the phone 14 (not represented), to the server 110 a message 232 including the transaction data and the corresponding transaction signature. Such an embodiment allows using an existing mobile network instead of passing through a service provider infrastructure.

According to another embodiment (not represented), the kernel application 12A sends, through the gate 16, to the server 110 another message including the transaction data and the corresponding transaction signature. Such an embodiment implies having a service provider infrastructure that is connected to the server 110.

Optionally, the server 110 sends to the kernel application 12A a message (not represented) including an acknowledgement of receipt of the transaction data and signature.

The server 110 analyses 234 whether the received transaction signature S is or is not valid. If the transaction signature S is not valid, the server 110 stops 235 the initiated data processing.

Otherwise, i.e. if the transaction signature S is valid, the server 110 goes on and processes the next step of the initiated data processing. The server 110 (or another entity which the server 110 is connected to) processes 236 the transaction data.

Optionally, the server 110 sends to the kernel application 12A a message (not represented) informing about a successful processing of the transaction data.

Once the transaction data and signature have been sent by the kernel application 12A (through either the mobile network 18 or the gate 16) to the server 110 and preferably an acknowledgment of receipt has been received by the kernel application 12A, the kernel application 12A deletes or removes 237 preferably the transaction data and transaction signature that are stored within the SE memory 124.

Then, the SE 12 is ready to receive other data, i.e. by returning to the data reception step 22.

The invention off-line transaction operation needs at least one cryptographic operation, at the client side, namely at least one transaction signature generation.

The invention solution is therefore secure.

The invention solution is user friendly since an individual uses her/his terminal, like e.g. a mobile phone, for accessing a service.

The invention solution allows accessing, in a seamless, quick and secure manner, a service.

The invention solution reduces cost relating to the service provider infrastructure by moving the POS terminal into the user terminal with respect to the aforementioned prior art solution.

The embodiment that has just been described is not intended to limit the scope of the concerned invention. Other embodiments may be given. As another embodiment example, instead of supporting three separate applications, the device for accessing a service supports only one application or two applications, namely the kernel application and the transaction application, that perform the functions that the SE 12 performs and that are described supra. According to still another embodiment, instead of supporting three separate applications, the SE 12 supports only one application or two applications, namely the kernel application and the transaction application, and the phone 14 supports the service application that are described supra.

**Claims**

1. A method (20) for accessing a service,
   **characterized in that**, a device (12) comprising data storing means (124), the method comprises the following steps:

   - the device receives (22) data;
   - the device gets (28), based upon the received data, transaction data;
   - the device signs (212) the transaction data by using a private key relating to a transaction processing, a signature operation result being a transaction signature, the data storing means storing (218) the transaction data and the transaction signature;
   - the device gets (224), based upon the received data, service data;
   - the device sends to a first external entity the service data (228);
   - the device sends the transaction data and the transaction signature (232) to either the first external entity or a second external entity.

2. Method according to claim 1, wherein, the device accessing a public key relating to a service provider, the method further includes the following steps:

   - the device receives, besides data, a data signature relating to a service provider;
   - the device verifies whether the data signature is or is not valid by using the received data and the public key relating to the service provider;
   - only if the data signature is valid, then the device gets, based upon the received data, transaction data.

3. Method according to claim 1 or 2, wherein, prior to getting transaction data, the method further includes the following steps:

   - the device analyses whether the received data is or is not valid;
   - only if the received data is valid, then the device gets, based upon the received data, transaction data.

4. Method according to any of claims 1 to 3, wherein, prior to signing the transaction data, the method further comprises the following step:

   - only if the device authenticates successfully a user of the device, then the device signs the transaction data.

5. Method according to any of claims 1 to 4, wherein, prior to getting, based upon the received data, transaction data, the data storing means storing a decipherment key relating to the service provider, the method further includes a step in which the device deciphers the received data to get data in plain text.

6. Method according to claim 1, wherein, the data storing means storing a kernel application (12A), the data storing means storing an application relating to a transaction processing (12B), as a first application, the method includes the following steps:

   - the kernel application sends to the first application a message (210) including a request for performing a transaction and the transaction data;

- the first application signs (212) the transaction data by using the private key, a signature operation result being a transaction signature, the data storing means storing (218) the transaction data and the transaction signature;
- the first application sends to the kernel application the transaction data and the transaction signature (216);
- the kernel application or a second application relating to a service provider and being stored within the data storing means gets (224), based upon the received data, service data;
- the kernel application or a second application relating to a service provider and being stored within the data storing means sends (228) to a first external entity the service data;
- the kernel application sends the transaction data and the transaction signature (232) to either the first external entity or a second external entity.

7. Method according to claim 6, wherein, prior to sending the transaction data and the transaction signature, the method further comprises the following steps:

- the first application analyses whether a corresponding transaction is accepted or refused, a transaction analysis result (214) being an authorization or a refusal;
- the first application sends to the kernel application, besides the transaction data and the transaction signature, the transaction analysis result (216); and
- the kernel application verifies (222) whether the transaction analysis result is or is not an authorization, only if the transaction analysis result is an authorization, then the kernel application sends the transaction data and the transaction signature (232) to either the first external entity or a second external entity.

8. Method according to claim 6 or 7, wherein, prior to getting the transaction data, a counter being initially set (21) to an initial value, the counter being incremented (220), each time, the kernel application stores newly the transaction data and the transaction signature, the method further comprises the following steps:

- the kernel application analyses (24) whether the counter is less than or equal to a predetermined threshold value; and
- only if the counter is less than or equal to the predetermined threshold value, the kernel application gets (28) the transaction data.

9. Method according to any of claims 1 to 8, wherein the transaction data includes at least one element of a group comprising:

- at least one identifier;
- device user information;
- at least one transaction status;
- a transaction amount;
- a transaction currency;
- a transaction date;
- a transaction type and description;
- at least one transaction cryptogram;
- at least one transaction security parameter.

10. A device (12) for accessing a service, **characterized in that**, the device comprising data storing means (124), the device is configured:

- to receive data;
- to get, based upon the received data, transaction data;
- to sign the transaction data by using a private key relating to a transaction processing, a signature operation result being a transaction signature, the data storing means storing the transaction data and the transaction signature;
- to get, based upon the received data, service data;
- to send to a first external entity the service data; and
- to send the transaction data and the transaction signature to either the first external entity or a second external entity.

**Fig. 1**

12B TRANSACTION APPLICATION

12A KERNEL APPLICATION

12C SERVICE APPLICATION 228

16 GATE

110 SERVER

10

20

N:=0    21

RECEIVE DATA    22

24    N ≤ T ?    KO    END    26

OK

GET TRANSACTION DATA    28

210

GENERATE SIGNATURE S    212

GENERATE RESULT R    214

216

STORE TRANSACTION DATA AND S    218

220    N:=N+1

222    R = OK ?    KO    END    223

OK

224    GET SERVICE DATA    232

237    REMOVE TRANSACTION DATA AND S

REMOVE SERVICE DATA    229

PROCESS SERVICE DATA    230

226

232

232

235    END    KO    IS S VALID ?    234

OK

PROCESS TRANSACTION DATA    236

**Fig. 2**

Europäisches
Patentamt

European
Patent Office

Office européen
des brevets

# EUROPEAN SEARCH REPORT

Application Number

EP 15 30 5155

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/026045 A1 (MATHEWS REBECCA A [US] ET AL) 22 January 2015 (2015-01-22) * abstract; figure 3 * * paragraph [0009] - paragraph [0011] * ----- | 1-10 | INV. G06F21/35 G06F21/64 G06F21/72 G06F21/77 G06F21/71 |
| A | EP 2 088 531 A1 (NOVOSEC AG [DE]) 12 August 2009 (2009-08-12) * abstract; figures 1-3 * * paragraph [0010] - paragraph [0013] * ----- | 1-10 | |
| A | EP 2 493 230 A1 (SAMSUNG ELECTRONICS CO LTD [KR]) 29 August 2012 (2012-08-29) * abstract; figures 1-8 * * paragraph [0007] - paragraph [0032] * ----- | 1-10 | |

TECHNICAL FIELDS
SEARCHED      (IPC)

G06F

The present search report has been drawn up for all claims

| Place of search | Date of completion of the search | Examiner |
|---|---|---|
| Munich | 6 August 2015 | Harms, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5155

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2015

| Patent document cited in search report | | Publication date | Patent family member(s) | | Publication date |
|---|---|---|---|---|---|
| US 2015026045 | A1 | 22-01-2015 | US 2015026045 A1 | | 22-01-2015 |
| | | | US 2015026050 A1 | | 22-01-2015 |
| | | | WO 2015009528 A1 | | 22-01-2015 |
| | | | WO 2015009529 A1 | | 22-01-2015 |
| EP 2088531 | A1 | 12-08-2009 | DE 102008007367 A1 | | 06-08-2009 |
| | | | EP 2088531 A1 | | 12-08-2009 |
| | | | US 2009199006 A1 | | 06-08-2009 |
| EP 2493230 | A1 | 29-08-2012 | CN 102651866 A | | 29-08-2012 |
| | | | EP 2493230 A1 | | 29-08-2012 |
| | | | KR 20120096787 A | | 31-08-2012 |
| | | | US 2012216044 A1 | | 23-08-2012 |

EPO FORM P0459

For more details about this annex : see Official Journal of the European Patent Office, No. 12/82